# EUROPÄISCHE PATENTSCHRIFT

(11) **EP 0 619 029 B1**
(45) Veröffentlichungstag und Bekanntmachung des Hinweises auf die Patenterteilung: **05.11.1997**
(21) Anmeldenummer: 91916544.9
(22) Anmeldetag: 03.04.1991
(51) Int. Cl.: G02F 1/00

(54) **ELEKTROOPTISCHES SYSTEM**
ELECTRO-OPTICAL SYSTEM
SYSTEME ELECTRO-OPTIQUE

(30) Priorität: 03.04.1990 DE 4010503
(43) Veröffentlichungstag der Anmeldung: 12.10.1994
(73) Patentinhaber: MERCK PATENT GmbH, D-64271 Darmstadt (DE)
(72) Erfinder: SCHEUBLE, Bernhard, D-6104 Seeheim (DE); BAUR, Günter, D-7800 Freiburg (DE); FEHRENBACH, Waltraud, D-7830 Emmendingen (DE); WEBER, Barbara, D-7637 Ettenheim (DE)
(86) Internationale Anmeldenummer: EP9100636
(87) Internationale Veröffentlichungsnummer: WO9217813

(56) Entgegenhaltungen:
- EP-A- 246 842
- EP-A- 0 297 841
- EP-A- 0 349 900
- EP-A- 0 371 797
- EP-A- 0 379 315
- WO-A-90/16005
- DE-A- 3 911 620
- GB-A- 2 154 016
- US-A- 4 786 147
- US-A- 4 896 947
- US-A- 4 952 030

## Beschreibung

Die Erfindung betrifft ein elektrooptisches System gemäß dem Oberbegriff von Anspruch 1 oder 3.

Wichtige Kriterien zur Beurteilung der optischen Eigenschaften elektrooptischer Systeme sind die erzielten Werte für
- Kontrast
- Helligkeit
- Blickwinkelabhängigkeit des Kontrastes
- Blickwinkelabhängigkeit der Farbwerte.

Anfangs wurden TN-Displays (twisted nematic) im s.g. Maugin-Bereich (d ·Δn >>λ) betrieben, wie dies z.B. in IEEE-Transaction und Electron Devices, 25 (1978), 1125-1137, angegeben ist. In diesem Bereich folgt der Polarisationsvektor des einfallenden Lichtes im sichtbaren Spektralbereich der Schraubenstruktur der nicht angesteuerten Zelle, unabhängig von Dickenschwankungen in der Zelle. Derartige Displays weisen jedoch eine äußerst hohe Blickwinkelabhängigkeit des Kontrastes und damit einen stark eingeschränkten Beobachtungswinkelbereich auf.

Eine entscheidende Verbesserung der Blickwinkelabhängigkeit des Kontrastes wird beobachtet, wenn das System für das Produkt aus Doppelbrechung Δn und Schichtdicke d des Flüssigkristalls einen Wert aus dem in DE 30 22 218 angegebenen Intervall 0,150 µm ≤ d · Δn ≤ 0,600 pm aufweist. Nachteilig ist, daß im Sub-Maugin-Bereich nach Electronics Letters, 10 (1974), 2-4, ein von Zelldicke und Wellenlänge abhängiges Sperrverhalten resultiert, wodurch eine gewisse Aufhellung des spannungsfreien Zustands resultieren kann.

In US 4,443,065 ist eine Doppelzellanordnung vorgeschlagen worden, wobei eine Zelle elektrisch angesteuert wird und zur Informationsdarstellung benutzt wird, während die andere zur Kompensation des optischen Gangunterschiedes d·Δn der geschalteten Zelle dient. Derartige Anordnungen weisen jedoch häufig infolge der zusätzlichen Flüssigkristallschicht unzureichende Werte für den Kontrast und die Helligkeit auf.

Bei elektrooptischen Systemen, die auf dem ECB- (Electrically Controlled Birefrigence) oder DAP-Effekt (Distortion of Aligned Phases) beruhen, weisen die Flüssigkristallmoleküle eine negative dielektrische Anisotropie Δε, eine homeotrope Randorientierung und eine unverdrillte Struktur auf, wie dies z.B. in Displays 7 (1986), 3, beschrieben ist. Zur Vergrößerung des Beobachtungswinkelsbereichs sind Kompensationsschichten vorgeschlagen worden, die auf Polymerfolien (EP 0,239,433 und EP 0,240,379) oder Flüssigkristallschichten (DE 39,11,620) mit negativer optischer Anisotropie basieren. Die elektrooptischen Eigenschaften derartiger kompensierter ECB-Systeme werden häufig durch nicht ausreichende Werte für Kontrast und Helligkeit beeinträchtigt.

EP 0 246 842 beschreibt elektrooptische Systeme mit verdrillten nematischen Zellen, deren Doppelbrechung entweder durch eine Anordnung einer ungeraden Anzahl von anisotropen Folien, deren optische Achsen kontinuierlich jeweils 15° gegeneinander verdreht sind, oder durch eine zweite, verdrillte Flüssigkristallschicht kompensiert wird.

US 4,896, 947 beschreibt ein elektrooptsiches System mit einer Flüssigkristallschicht, mit einer Verdrillung von 0° und bis zu 100°, deren Doppelbrechung jedoch nicht durch eine Kompensationsschicht kompensiert wird.

US 4,786,147 beschreibt Flüssigkristallschichten mit negativer dielektrischer Anisotropie mit einem Verdrillungswinkel von mehr als 0° bis 90° ohne zusätzliche Kompensationsschicht.

EP 0 379 315 beschreibt ein elektrooptisches System mit einer optisch zweiachsigen Kompensationsschicht, wobei die dem kleineren Brechungsindex entsprechende Achse annähernd parallel zur Substratoberfläche ist.

EP 0 297 841 beschreibt einachsig verstreckte thermoplastische Polymerfilme zur Kompensation des optischen Gangunterschieds von Flüssigkristallschichten

Die Aufgabe der vorliegenden Erfindung bestand daher darin, elektrooptische Systeme, basierend auf dem TN- oder ECB-Effekt und enthaltend eine oder mehrere Kompensationsschichten, bereitzustellen, die sich durch verbesserte elektrooptische Eigenschaften und insbesondere hohe Werte für Kontrast und/oder Helligkeit und/oder Blickwinkelabhängigkeit von Kontrast und/oder der Farbwerte auszeichnen.

Es wurde gefunden, daß diese Aufgabe durch die Bereitstellung cer erfindungsgemäßen elektrooptischen Systeme gelöst werden kann.

Gegenstand der Erfindung ist somit ein elektrooptisches System, gemäß dem kennzeichnenden Teil des Anspruchs 1 oder 3.

Die erfindungsgemäßen elektrooptischen Systeme enthalten eine ansteuerbare Flüssigkristallschicht, die zwischen planparallelen, durchsichtigen Substraten angeordnet ist, deren Innenseiten mit Elekktrodenschichten und darüberliegenden Orientierungsschichten versehen sind. Die Elektroden bestehen z.B. aus dünnen, ebenen und transparenten Indium-Zinnoxid- (ITO) oder Indiumoxidschichten. Zur Randorientierung der Flüssigkristalle werden im allgemeinen Polymerschichten, z.B. Polyimid- oder Polyvinylalkohol-Schichten, verwendet, denen durch Reiben, gegebenenfalls bei gleichzeitiger Druckanwendung, eine einheitliche Ausrichtung gegeben wird. Daneben können Orientierungsschichten auch durch Bedampfung mit anorganischen Materialien wie z.B. Siliciumoxid oder Magnesiumfluorid erhalten werden. Eine Übersicht über die verschiedenen Ausrichtungstechniken findet sich z.B. in Thermotropic Liquid Crystals, G.W. Gray (ed.), S. 75-77. Wenn die Flüssigkristallschicht nach dem TN-Prinzip betrieben wird, weisen die Flüssigkristalle eine parallele Randorientierung, üblicherweise mit einem kleinen Pretiltwinkel in der Größenordnung von z.B. 1° bis 10° auf. Beruht die Flüssigkristallschicht dagegen auf dem ECB-Prinzip, liegt eine homöotrope Randorientierung der Flüssigkristallmoleküle vor, wobei die Moleküle üblicherweise mit einem kleinen Pretiltwinkel von z.B. 0,5-5° gegen die Senkrechte gekippt sind. In TN-Flüssigkristallschichten wird der Twistwinkel, der zwischen 0° und 100° und insbesondere zwischen 0° und 90° beträgt, üblicherweise durch die Ausrichtung der Orientierungsschichten definiert. Es ist aber auch möglich, daß der Twistwinkel β durch einen cholesterischen Pitch des Flüssigkristalls gegeben ist. Auch wenn der Twistwinkel nicht über den Pitch des Flüssigkristalls eingestellt wird, wird im allgemeinen ein chiraler Dotierstoff in geringen Konzentrationen zur Vermeidung von Reverse-Twist und Reverse-Tilt zugegeben, wie dies z.B. in DE 25 07 524 beschrieben ist.

In herkömmlichen ECB-Flüssigkristallschichten liegen die Flüssigkristallmoleküle im wesentlichen unverdrillt vor. Demgegenüber kann bei den erfindungsgemäßen elektrooptischen Systemen die ECB-Flüssigkristallschicht eine Verdrillung 0° < β < 90° aufweisen, wobei der Verdrillungswinkel β durch die Ausrichtung der Orientierungsschichten und/oder durch den cholesterischen Pitch des Flüssigkristalls definiert sein kann. ECB-Flüssigkristallschichten mit verdrillter Struktur sind ebenso wie elektrooptische Systeme, enthaltend eine derartige ECB-Flüssigkristallschicht, neu und bevorzugt und sie sind Gegenstand dieser Erfindung.

Die erfindungsgemäßen elektrooptischen Systeme können neben dieser Flüssigkristallschicht eine oder mehrere, vorzugsweise eine Kompensationsschicht enthalten. Die Kompensationsschichten können auf niedermolekularen Flüssigkristallen, flüssigkristallinen Polymeren oder thermoplastischen Polymeren basieren, die z.B. zweidimensional verstreckt und damit optisch einachsig gemacht werden.

Die Verwendung von Kompensationsschichten basiert auf einem wohlbekannten physikalischen Prinzip, das z.B. auch im Babinet-Soleil-Kompensator realisiert ist. Man kombiniert z.B. zwei optisch einachsige Medien, die im wesentlichen den gleichen optischen Gangunterschied d · Δn aufweisen, wobei jedoch die optischen Achsen beider Medien aufeinander senkrecht stehen. Linearpolarisiertes Licht, dessen Polarisationsrichtung nicht in Richtung der optischen Achse zeigt, wird im ersten Medium in einen ordentlichen und in einen außerordentlichen Strahl aufgespalten. Da die optischen Achsen der beiden Medien senkrecht aufeinander stehen, läuft der ordentliche Strahl des ersten Mediums im zweiten Medium als außerordentlicher Strahl und umgekehrt. Die optische Wegdifferenz im ersten Medium beträgt d · (nₑ-nₒ), im zweiten Medium hingegen d · (nₒ-nₑ), so daß die Gesamtdifferenz 0 ist, und daß aus den beiden optischen einachsigen Medien bestehende System keine Doppelbrechung aufweist. Diese Überlegungen können entsprechend auf Systeme mit mehreren Kompensaiionsschichten oder andere z.B. optisch biaxiale Medien übertragen werden.

Erfindungsgemäße elektrooptische Systeme mit TN-Flüssigkristallschicht können z.B. eine oder mehrere, insbesondere jedoch eine Kompensationsschicht enthalten, die auf niedermolekularen nematischen Flüssigkristallschichten basiert. Die l...atrix nematischer Flüssigkristallmoleküle ist ein ...iachsiger Ellipsoid, wobei der zur Moleküllangachse gehörige Brechungsindex groß gegen die beiden anderen ist.

Auf nematischen Flüssigkristallen basierende Kompensationsschichten sind bereits für TN-Zellen und insbesondere auch STN-Zellen vorgeschlagen worden; nähere Angaben finden sich z.B. in US 4,435,065, EP 0,139,351, K. Katoh et al., Jap. J. Appl. Phys. 26 (1987), L1784 und SID Digest Vol. 20, 1989, papers 22.3-22.6.

Die flüssigkristalline Kompensationsschicht ist ebenso wie die zur Informationsdarstellung dienende Flüssigkristallschicht zwischen planparallelen, mit Orientierungsschichten versehenen Substraten angeordnet. Da im allgemeinen auf eine Ansteuerung der Kompensationsschicht verzichtet wird, sind üblicherweise keine Elektrodenschichten vorhanden; es sind jedoch auch Ausgestaltungen mit Elektrodenschichten möglich. Vorzugsweise wird zur Erhöhung der Transmission ein der Flüssigkristallschicht und der flüssigkristallinen Kompensationsschicht gemeinsames mittleres Substrat verwendet. Es können jedoch auch zwei getrennte mittlere Substrate benutzt werden. Der Flüssigkristall in der Kompensationsschicht liegt vorzugsweise in einer verdrillten Struktur vor, wobei der durch die Ausrichtung der Orientierungsschichten und/oder durch den cholesterischen Pitch des Flüssigkristalls gegebene Verdrillungswinkel insbesondere gegensinnig zum Verdrillungswinkel β der Flüsssigkristallschicht ist. Die Absolutbeträge der Verdrillungswinkel werden vorzugsweise im wesentlichen gleich groß gewählt; allerdings sind auch größere Abweichungen möglich. Der Winkel zwischen den Ausrichtungen der Orientierungsschichten der Flüssigkristallmoleküle an den beiden Seiten des der flüssigkristallinen Kompensationsschicht und der Flüssigkristallschicht gemeinsamen mittleren Substrats bzw. an dem unteren Substrat der oberen und dem oberen Substrat der unteren Schicht beträgt zwischen 30°, vorzugsweise 50° und 130° und insbesondere im wesentlichen 90°.

Erfindungsgemäße elektrooptische Systeme mit einer TN-Flüssigkristallschicht können auch eine oder mehrere, insbesondere jedoch eine Kompensationsschicht aufweisen, die auf einem flüssigkristallinen Polymer basiert. Derartige Kompensationsschichten sind ausführlich in DE 39 19 397 beschrieben.

Erfindungsgemäße elektrooptische Systeme mit einer TN-Flüssigkristallschicht können weitere, vorzugsweise auch eine oder mehrere, insbesondere jedoch eine Kompensationsschicht aufweisen, die auf einem optisch negativen Medium mit 3 optischen Brechungsindices basieren.

Die dem kleinsten Brechungsindex entsprechende optische Achse kann in einem System im wesentlichen parallel zu den Elektrodenoberflächen orientiert sein, wobei der Winkel zwischen der dem kleinsten Brechungsindex entsprechenden optischen Achse und der Elektrodenoberfläche 0 ≤ τ ≤ 2° beträgt. In einer bevorzugten Ausgestaltung der erfindungsgemäßen Systeme bildet die dem kleinsten Brechungsindex entsprechende elektrooptische Achse mit der Elektrodenoberfläche einen Winkel 2° < τ < 60°, u.z. dergestalt, daß der Winkel zwischen den optischen Achsen der ansteuerbaren Flüssigkristallschicht und der Kompensationsschicht beim Anlegen und Hochfahren einer Spannung an die ansteuerbare Flüssigkristallschicht ein Minimum durchläuft. Besonders bevorzugt ist für τ der Breich 5° < τ ≤ 45° und ganz besonders der Bereich 5° ≤ τ ≤ 25°. Die von den beiden anderen Brechungsindices des Kompensationsmediums aufgespannte Ebene bildet mit den Direktoren der Flüssigkristallmoleküle der TN-Schicht an den beiden Seiten des der Kompensationsschicht und der TN-Flüssigkristallschicht gemeinsamen mittleren Substrates bzw. an dem unteren Substrat der soberen und dem oberen Substrat der unteren Schicht in der Substratebene einen Winkel, der zwischen 30° und 150°, vorzugsweise jedoch zwischen 50° und 130° und insbesondere im wesentlichen 90° beträgt.

In einem System wird ein uniaxiales, optisch negatives Kompensationsmedium verwendet, das eine Symmetrieachse aufweist, welche im wesentlichen parallel ist zur außerordentlichen Achse und mit den Substratplatten einen Winkel zwischen 0° ≤ τ ≤ 60° bildet, wobei τ im Bereich 2° ≤ τ ≤ 60° orientiert ist wie oben angegeben.

Die biaxialen bzw. uniaxialen, optisch negativen Kompensationsschichten basieren vorzugsweise auf niedermolekularen diskotischen und/oder cholesterischen Molekülen, wobei diese im wesentlichen homöotrop orientiert sein können oder aber auch gekippt angeordnet sein können. Zur Orientierung dieser Moleküle, die eine mehr oder weniger flache, zweidimensionale, z.B. scheibchenförmige Gestalt aufweisen, kann die Substratoberfläche z.B. mit Lecitin, quartären Ammoniumverbindungen wie z.B. HTAB (US 3,694,053), Silanverbindungen (Appl. Phys. Lett. 22 (1973), 368), Chromkomplexen (Appl. Phys. Lett. 27 (1975), 268) oder auch mit aus anderen Materialien bestehenden Orientierungsschichten versehen werden. Eine im wesentlichen homöotrope Orientierung bedeutet, daß die Flächennormale der von den beiden größeren Brechungsindices aufgespannten Ebene im wesentlichen parallel zu der Elektrodenoberfläche verläuft oder mit dieser einen kleinen Winkel von z.B. weniger als 2° bildet ("aufrecht stehende Scheiben"), während diese Flächennormale bei einer gekippten Anordnung der Moleküle mit den Elektrodenoberflächen einen Winkel von z.B. 2°-60° bildet ("gekippte Scheiben"), wobei die Orientierung dieses Winkels dergestalt ist, daß der Winkel zwischen den optischen Achsen der Kompensationsschicht (entspricht der dem kleinsten Brechungsindex entsprechenden Achse bzw. der eben angeführten Flächennormalen) und der ansteuerbaren Flüssigkristallschicht sich beim Anlegen und Hochfahren einer Spannung an die ansteuerbare Flüssigkristallschicht zunächst verringert, ein Minimum durchläuft (Nulldurchgang) und dann wieder ansteigt. Beispielhaft sei eine Reihe diskotischer flüssigkristalliner Verbindungen genannt, wobei diese Aufzählung die Erfindung lediglich erläutern soll, ohne sie jedoch zu begrenzen:
(1) hexasubstituiertes Benzol 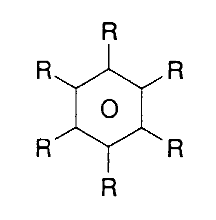
(2) 2, 3, 6, 7, 10, 11-hexasubstituierte Triphenyle 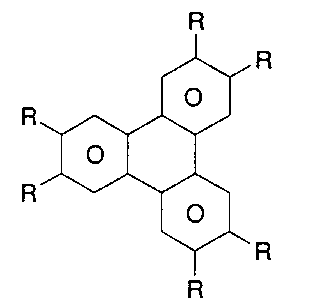
(3) 2, 3, 7, 8, 12, 13-hexasubstituierte Truxene bzw. deren oxidierte Homologe 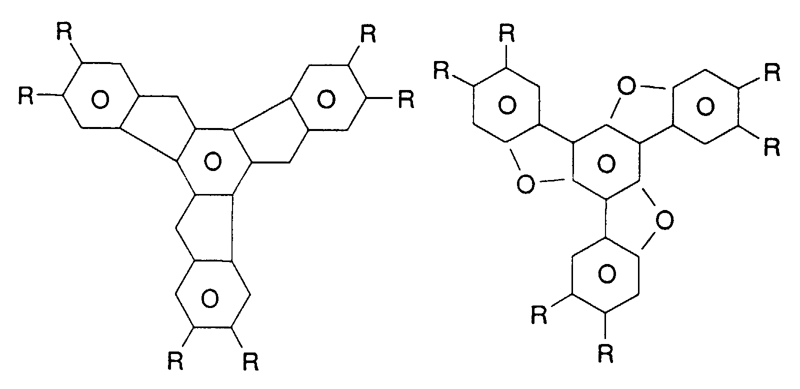
(4) 1, 2, 3, 5, 6, 7-hexasubstituierte Anthrachinone 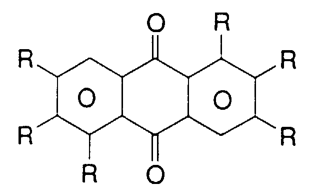
worin R jeweils unabhängig voneinander eine Alkylgruppe mit bis zu 30 C-Atomen, worin auch eine oder mehrere CH₂-Gruppen durch u.a. -O-, CO-O-, oder -C≡C-, ersetzt sein können, wobei 2 O-Atome nicht direkt miteinander verknüpft sind.

Bevorzugt sind die Verbindungen (1), (2), (3) und (4); insbesondere jedoch die Verbindungen (1), (2) und (3). Besonders bevorzugt sind weiter diskotische Flüssigkristallverbindungen, bei denen in allen Resten R mindestens eine -CH₂-Gruppe durch eine 1,4-Phenylengruppe ersetzt ist.

Diskotische Flüssigkristalle, die eine nematisch diskotische Phase N_{D} aufweisen, sind bevorzugt. Im Unterschied zur kolumnardiskotischen Phase, bei der die Moleküle zu Säulen zusammengepackt sind, ist die Anordnung der Moleküle in der nematisch diskotischen Phase weniger starr. Die Moleküle können frei rotieren und sie können sich mehr oder weniger frei orientieren, wobei jedoch ihre Ebenen im Mittel parallel zueinander angeordnet sind. Es können auch cholesterisch nematisch diskotische Phasen N_{D}* verwendet werden.

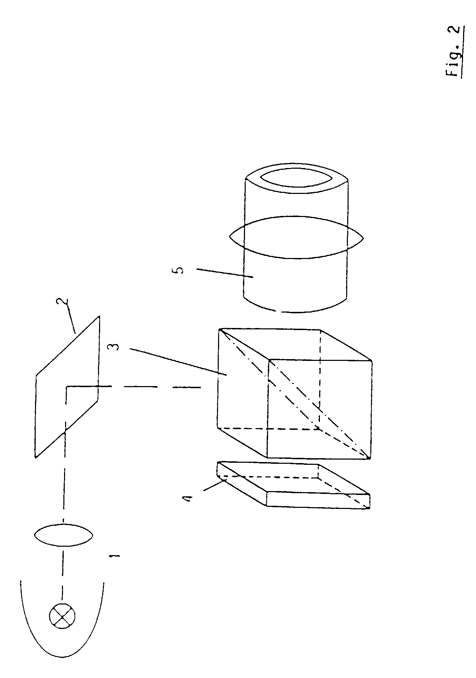

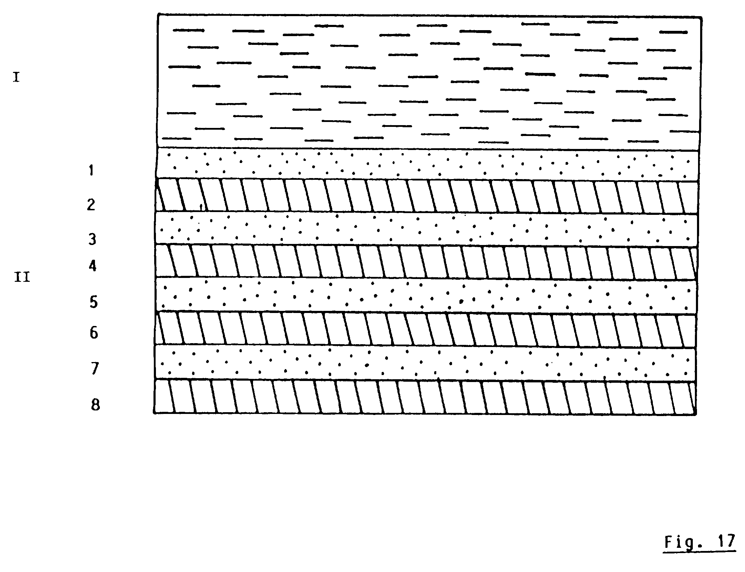

Eine optisch negative Kompensationsschicht kann auch durch eine Folge von optisch positiven Schichten approximiert werden, wobei sich deren Orientierung von Schicht zu Schicht ändert. Beispielhaft ist in Fig. 17 eine erfindungsgemäße Anordnung schematisch wiedergegeben, bei der die ansteuerbare Flüssigkristallschicht, welche auf einem nematischen Flüssigkristall mit homogener Orientierung (α) und einem Twistwinkel β = 0° basiert, mit einer Folge von 8 optisch positiven Kompensationsschichten kombiniert ist. Diese Kompensationsschichten bestehen abwechselnd aus parallel (= homogen oder planar) orientierten (α = 1°) nematischen Flüssigkristallschichten (β) und homöotrop orientierten Flüssigkristallschichten (β = 0°), wobei die Direktoren der Flüssigkristallmoleküle an dem unteren Substrat der ansteuerbaren Schicht (bzw. an dem entsprechenden gemeinsamen Substrat) mit den Direktoren der Flüssigkristallmoleküle an dem oberen Substrat (bzw. an dem entsprechenden gemeinsamen Substrat) der benachbarten Kompensationsschicht (s. Fig. 17) einen Winkel von etwa 90° bildet. Die Dicke der ansteuerbaren Flüssigkristallschicht in Fig. 17 beträgt d = 8 µm. Die Gesamtschichtdicke der Kompensationsschicht und die in der angesteuerten Schicht und in der Kompensationsschicht verwendeten nematischen Flüssigkristalle sind dabei so gewählt, daß die optische Dicke der Kompensationsschicht mit 2 d·Δn doppelt so groß ist wie die der angesteuerten Flüssigkristallschicht mit d·Δn. Wird etwa in der angesteuerten Flüssigkristallschicht und in der Kompensationsschicht der gleiche Flüssigkristall verwendet, wird die Gesamtschichtdicke der Kompensationsschicht zu 2 d = 16 µm gewählt; es sind aber auch beliebige andere Kombinatinen der Schichtdicke und der Doppelbrechung der Kompensationsschicht möglich. Die Verwendung des gleichen Flüssigkristalls hat den Vorteil, daß die angesteuerte Flüssigkristallschicht und die Kompensationsschicht dieselbe Dispersion und dieselbe Temperaturabhängigkeit von Doppelbrechung und Dispersion aufweisen. Die Anordnung der Fig. 17 befindet sich zwischen 2 Polarisatoren, wobei der Winkel ψ, den der vordere Polarisator mit der Orientierungsrichtung der Direktoren der nematischen Flüssigkristallmoleküle auf der obersten Substratplatte bildet, 45° beträgt. Der hintere Polarisator ist gegenüber dem vorderen um 90° gedreht. In Fig. 18 ist für dieses erfindungsgemäße System die Transmission als Funktion der Doppelbrechung Δn der angesteuerten Flüssigkristallschicht bei einem in der Ebene gemessenen Winkel (Azimutwinkel) φ = 135° bei Nichtansteuerung des Systems gezeigt. Man sieht, daß das System bis zu einem Beobachtungswinkel Θ ideales Sperrverhalten im gezeigten Δn-Bereich zeigt, während bei Beobachtungswinkeln Θ von mehr eine Transmission bei höheren Δn-Werten von mehr als etwa 0,0735 gefunden wird. Ebenso wurde gefunden, daß die Transmission im nicht angesteuerten Zustand im sichtbaren Spektralbereich praktisch nicht von der Wellenlänge des Lichts abhängt.

Dieses Transmissionsverhalten entspricht dem eines erfindungsgemäßen Systems mit einer optisch negativen Kompensationsschicht aus z.B. diskotischen Molekülen, die so orientiert sind, daß die dem kleinsten Brechungsindex entsprechende Achse im wesentlichen parallel zu den Elektrodenoberflächen ist oder mit diesen einen wie oben definierten Winkel τ bildet.

Die in Fig. 17 gezeigte Kompensationsschicht besteht aus 8 Zellen mit einer Dicke von 2 µm, welche mit dem gleichen Flüssigkristall wie die ansteuerbare Flüssigkristallschicht befüllt sind. Eine derartige Anordnung ist jedoch i.a. wegen der hohen Anzahl der benötigten Substrate und Orientierungsschichten in der Praxis nicht bevorzugt, u.z. zum einen wegen des hohen konstruktiven Aufwands bei der Herstellung des Systems und zum anderen wegen der durch die vielen Glassubstrate und Orientierungsschichten deutlich verminderten Gesamttransmission.

Mit Fig. 17 soll aber nur das Prinzip einer derartigen Kompensationsschicht verdeutlicht werden, und es sind vielfältige Abweichungen möglich. So können z.B. an Stelle der Schichten von monomeren nematischen Flüssigkristallen bzw. in Kombination mit diesen auch Filme aus flüssigkristallinen Polymeren, deren mesogene Gruppen entsprechend orientiert sind, und/oder Filme aus isotropem Polymermaterial, die entsprechend axial verstreckt sind, aufeinander gestapelt werden. Flüssigkristallin-polymere Kompensationsfilme und durch Verstreckung von thermoplastischen Polymeren erhaltene Kompensationsschichten sind weiter unten kurz beschrieben.

Bei der Approximierung einer optisch negativen Kompensationsschicht kommt es darauf an, daß die Kompensationsschicht aus einer Folge optisch positiver Schichten besteht, wobei die optische Achse zweier aufeinanderfolgender Schichten einen Winkel zwischen 60° insbesondere 80° und 120° und bilden und insbesondere im wesentlichen aufeinander senkrecht stehen. Dabei besteht die Kompensationsschicht vorzugsweise aus mindestens 2 und insbesondere aus nicht weniger als 4 Schichten; ganz besonders bevorzugt sind Kompensationsschichten aus mindestens 8 aufeinanderfolgenden Schichten. Die Kompensationsschichten weisen vorzugsweise eine gerade Anzahl von aufeinanderfolgenden Schichten auf.

Die in den einzelnen Schichten der Kompensationsschicht enthaltenen Flüssigkristallmoleküle bzw. mesogenen Gruppen bei flüssigkristallinen Polymeren können unverdrillt oder verdrillt sein, wobei die Verdrillung vorzugsweise entsprechend der der ansteuerbaren Flüssigkristallschicht gewählt wird.

Die optische Dicke der Kompensationsschicht beträgt vorzugsweise mindestens das 1,5fache und insbesondere mindestens das ....fache der optischen Dicke der ansteuerbaren Flüssigkristallschicht.

Die Orientierung der auf die ansteuerbare Flüssigkristallschicht folgenden ersten Schicht der Kompensationsschicht ist nicht sehr kritisch. So kann statt der in Fig. 17 gezeigten Konfiguration z.B. auch eine Kompensationsschicht verwendet werden, deren erste Schicht homöotrop oder im wesentlichen homöotrop orientiert ist. Der Winkel, den die Flüssigkristallmoleküle der ansteuerbaren Flüssigkristallschicht und der benachbarten Schicht der Kompensationsschicht in zu Fig. 17 analogen Anordnungen in der Substratebene miteinander bilden, beträgt vorzugsweise zwischen 30° insbesondere zwischen 50° und (Fig. 17); bei anderen Anordnungen kann der Fachmann geeignete Orientierungen der parallel orientierten nematischen Moleküle in ansteuerbarer Flüssigkristallschicht und Kompensationsschicht leicht angeben.

Es hat sich gezeigt, daß optisch negative Kompensationsschichten durch einen derartigen Stapel aufeinanderfolgender, optisch positiver Schichten mit unterschiedlich orientierten optischen Achsen hervorragend approximiert werden kann. Bei einer Folge von mindestens ... optisch positiven Schichten werden die Eigenschaften einer optisch negativen Kompensationsschicht praktisch erreicht und bei Verwendung von mehr Schichten kann manchmal sogar im Vergleich zu einer optisch negativen Kompensationsschicht eine Verbesserung erreicht werden. Derartige aus einem Stapel optisch positiver Schichten bestehende, insgesamt optisch negative Kompensationsschichten sind neu und Gegenstand dieser Erfindung.

Als optisch negative Kompensationsschicht besonders bevorzugt sind auch flüssigkristalline verbindungen, die als mesogenen Rest cholesterische und/oder diskotische Gruppen aufweisen, die z.B. von den gerade eben angegebenen diskotischen, aber auch anderen cholesterischen oder diskotischen Verbindungen abgeleitet sein können. Weiterhin bevorzugt sind auch flüssigkristalline Seitenkettenpolymere mit brettförmigen mesogenen Gruppen. Eine im wesentlichen homöotrope Orientierung der mesogenen Gruppen wird üblicherweise dadurch erreicht, daß das Polymer oberhalb der Glastemperatur einem elektrischen und/oder magnetischen Feld und/oder einer mechanischen Spannung ausgesetzt wird. Die solcherart induzierte Orientierung läßt sich einfrieren, indem das Polymer bei eingeschaltetem Feld bzw. unter Beibehaltung der mechanischen Spannung unter die Glastemperatur abgekühlt wird. Derartige flüssigkristalline Polymere und Verfahren zu ihrer Orientierung sind ausführlich beschrieben.

Es wird für 2 erfindungsgemäße elektrooptische Systeme die Transmission I als Funktion des in der Displayebene gemessenen Winkels ⌀ mit dem von der Normalen der Displayebene aus gemessenen Beobachtungswinkel Θ als Parameter verglichen. Dabei basiert die Kompensationsschicht des ersten Systems auf einer nematischen Flüssigkristallschicht und für das zweite System wird eine optisch negative Kompensationsschicht mit homöotroper Orientierung verwendet, mit einem der kleinsten Brechungsindex und zwei andere, die gleich groß sind. Die Flüssigkristallschicht weist in beiden Anordnungen einen Twistwinkel von β = 22,5 und eine Schichtdicke von 8 µm auf und der Pretiltwinkel ist 1°. Es wird je ein Linearpolarisator auf der Eingangs- und Ausgangsseite der Anordnung verwendet; der hintere Polarisator ist gegenüber dem vorderen gedreht. Die an die TN-Flüssigkristallschicht gelegte Spannung ist für beide Anordnungen mit so gewählt, daß bei senkrechter Beobachtung (Θ = 0°) für alle Blickwinkel eine Transmission von 0,2· beobachtet wird. Es wird für beide Systeme die bei Beobachtungswinkeln von Θ = 10°, 20°, 45° ermittelten Transmissionen als Funktion von ⌀ gezeigt. Es werden Abweichungen von der für Θ = 0° ermittelten Transmission beobachtet, wobei die Stärke dieser Abweichungen ein Maß für die Blickwinkelabhängigkeit des Kontrastes ist.

Durch Vergleich ergibt sich, daß das System mit der neuen, erfindungsgemäßen Kompensationsschicht eine gute Blickwinkelabhängigkeitdes Kontrastes zeigt. Die Transmissionsprofile sind zwar etwas stärker elliptisch deformiert zeigen jedoch andererseits häufig eine geringere Ausdehnung.

Bei der zweiten beschriebenen Anordnung ist die dem kleinsten Brechungsindex entsprechende Achse im wesentlichen parallel zu der Elektrodenoberfläche ausgerichtet. Bei dieser Kompensationsmethode erhält man neben der gezeigten, guten Blickwinkelabhängigkeit der Transmission ein optimales Sperrverhalten im nicht angesteuerten Zustand.

Es hat sich überraschenderweise gezeigt, daß die Blickwinkelabhängigkeit des Kontrastes verbessert werden kann, wenn die optisch negative Kompensationsschicht eine gekippte Orientierung aufweist, d.h. wenn die dem kleinsten Brechungsindex entsprechende Achse einen Winkel τ mit der Elektrodenoberfläche bildet. Der Winkel τ ist vorzugsweise so daß sich der Winkel zwischen dem nematischen Direktor der Flüssigkristallmoleküle der ansteuerbaren Flüssigkristallschicht, d.h. der optischen Achse der ansteuerbaren Flüssigkristallschicht, und der dem kleinsten Brechungsindes entsprechenden Achse mit zunehmender Spannung zunächst verringert, um dann nach Durchlaufen eines Minimums (Nulldurchgang) wieder größer zu werden.

Bei einer derartigen Anordnung der Kompensationsschicht wird ein optimales Sperrverhalten nicht im spannungslosen Zustand beobachtet, sondern beim Hochfahren der Spannung unterhalb der Schwellenspannung, wenn der Winkel zwischen den optischen Achsen der ansteuerbaren Flüssigkristallschicht und der Kompensationsschicht minimal ist (Nulldurchgang). Hierdurch werden die elektrooptischen Eigenschaften derartiger Systeme jedoch kaum beeinträchtigt. Die Transmission I für ein erfindungsgemäßes System mit einer gekippten, optisch negativen Kompensationsschicht für eine Wellenlänge λ = 550 nm und bei einer der Schwellenspannung entsprechenden Spannung (U/Uₒ = 1.1) als Funktion des in der Display-Ebene gemessenen Blickwinkels mit dem von der Normalen der Displayebene aus gemessenen Beobachtungswinkel kann als Parameter dargestellt werden. Die ansteuerbare Flüssigkristallschicht dieses Systems weist einen Twistwinkel β = 0° und einen Pretilt von α = 1° auf und sowie eine Schichtdicke. Die Kompensationsschicht, deren kleinster Brechungsindex 1,500 beträgt, während die beiden anderen 1,5527 sind, besteht aus 8 optisch positiven Schichten von 1 µm mit abwechselnd homogener und homöotroper Orientierung. Die dem kleinsten Brechungsindex entsprechende optische Achse bildet mit der Elektrodenoberfläche einen Winkel von etwa 15° u.z. so, daß sich der winkel zwischen der Vorzugsrichtung der nematischen Direktoren und der dem kleinsten Brechungsindex entsprechenden Achse mit zunehmender Spannung zunächst verkleinert, um dann nach Durchlaufen eines Minimums (Nulldurchgang) wieder größer zu werden.

Man erkennt aus einem Diagramm für U/Uo = 1,3, daß die Transmission für Beobachtungswinkel bis etwa 30° nur wenig von der Transmission bei ...... 0° abweicht, die in diesem Diagramm als Kreis um den Ursprung mit einem Radius von etwa 0,68 wiederzugeben ist. Ein Vergleich zeigt, daß die Blickwinkelabhängigkeit des Kontrastes durch die gekippte Orientierung der optisch negativen Kompensationsschicht deutlich verbessert wird. Man erkennt, daß die elektrooptische Kennlinie des Systems praktisch nicht dadurch beeinträchtigt wird, daß der optimale Sperrzustand nicht mit dem spannungslosen Zustand zusammenfällt.

Elektrooptische Systeme, welche eine ansteuerbare nematische Flüssigkristallschicht mit .....β ≤..... und insbesondere 0 ≤ β ≤ 90° und eine optisch negative, gekippt orientierte Kompensationsschicht aufweisen, sind neu.

Diese Systeme sind durch ausgezeichnete Eigenschaften gekennzeichnet und sie sind Gegenstand der vorliegenden Erfindung. Das beschriebene spezielle System soll diese Erfindung lediglich erläutern, ohne sie jedoch zu begrenzen. Entsprechende Ergebnisse wurden auch für Systeme mit verdrillter nematischer ansteuerbarer Flüssigkristallschicht erhalten. Die Kompensationsschicht kann auf scheibenförmigen Molekülen wie z.B. Diskoten beruhen oder auf anderen biaxialen bzw. uniaxialen, optisch negativen Kompensationsschichten. Weiterhin ist es insbesondere auch möglich, daß die Kompensationsschicht durch einen der oben beschriebenen Stapei optisch positiver Schichten mit unterschiedlicher Orientierung approximiert wird.

Weiterhin können erfindungsgemäße elektrooptische Systeme mit einer TN-Flüssigkristallschicht auch eine oder mehrere, insbesondere jedoch eine Kompensationsschicht aufweisen, aie auf einem thermoplastischen Polymermaterial, z.B. auf der Basis von Poly.....onat,...... yvinylalkohol oder Polyethylen......hthalat basieren und axial mit der gewünschten Orientierung ausgerichtet werden; derartige Filme sind z.B. in EP 0,315,484 angegeben.

Erfindungsgemäße elektrooptische Systeme mit einer ECB-Flüssigkristallschicht weisen eine oder mehrere Kompensationsschichten, insbesondere jedoch eine Kompensationsschicht auf, welche auf thermoplastischen Polymeren, niedermolekularen Flüssigkristallen und/oder flüssigkristallinen Poly.........en basiert. Derartige Kompensationsschichten sind in der Liteatur ausführlich beschrieben.

Die erfindungsgemäßen elektrooptischen Systeme weisen weiter mindestens eine Vorrichtung zur Linearpolarisation des Lichts in einer derartigen Anordnung auf, daß das Licht vor Eintritt in die Flüssigkristallschicht und nach Austritt aus dieser mindestens einmal einen Linearpolarisator passiert. Häufig befindet sich auf beiden Seiten des Displays je ein Linearpolarisator; diese bestehen üblicherweise aus Folien, die auf die Substratplatten aufgeklebt werden. Eine derartige Anordnung kann transmissiv oder auch reflektiv bzw. transflektiv betrieben werden; bei reflektiven bzw. transflektiven Systemen ist hinter dem der Lichtquelle abgewandten Polarisator ein Reflektor bzw. ein Reflektor und eine zusätzliche Beleuchtungseinrichtung angebracht (s. z.B. E. Kaneko, Liquid Crystal TV Display, KTK Scientific Publishers, Tokio, 1987, S. 25 und S. 30). In anderen, bevorzugten Ausgestaltungen der erfindungsgemäßen elektrooptischen Systeme wird dagegen nur eine Vorrichtung zur Linearpolarisation des Lichts benutzt. Ein Beispiel ist die in Fig. 2 gezeigte reflektive Vorrichtung, bei der das in die Zelle ein- bzw. aus ihr austretende Licht das als Polarisator verwendete ..cNeil......ma als eine Kombination von 2 zueinander um 9..... gedrehten Polarisatoren sieht. Eine derartige reflektive Anordnung ist z.B. insbesondere für Projektionsdisplays interessant.

Der bisher beschriebene Aufbau der erfindungsgemäßen elektrooptischen Systeme orientiert sich im wesentlichen an der für derartige Systeme üblichen Bauweise. Der Begriff übliche Bauweise ist hierbei weit gefaßt und umschließt alle hier nicht explizit genannten Abwandlungen und Modifikationen. Wo im bisher beschriebenen Aufbau der erfindungsgemäßen elektrooptischen Systeme neue und erfinderische Elemente oder Die Flüssigkristallschicht und die Kompensationsschicht weisen vorzugsweise im wesentlichen die gleichen Werte für die Doppelbrechung und die Schichtdicke auf. Ganz besonders bevorzugt sind elektrooptische Systeme mit d = 4 µm, 0,0....... Δn ≤ ....... und .... 22,5°, 45° ≤ ψ ≤ ........ oder β = 45°, ......... ≤ .... ≤ ........oder β ......., 60° ≤ ψ ≤ 85°.

Die Abhängigkeit der Transmission I und/oder Blickwinkelabhängigkeit des Kontrastes von der Wellenlänge des Lichtes kann dadurch vermindert oder sogar weitgehend kompensiert werden, daß zur Beleuchtung des Systems eine Lampe mit geeigneter Spektralverteilung verwendet wird. Die Spektralverteilung des von der Lampe emittierten Lichts kann z.B. durch geeignete Wahl der Phospho.... beeinflußt und an die Wellenlängenabhängigkeit der Transmissicn angepaßt werden, wobei die Intensität des Lampen lichts etwa in Wellenlängenbereichen, in denen das System eine hohe Transmission zeigt, geschwächt wird und umgekehrt. Erfindungsgemäße elektrooptische Systeme, für die die Lampe eine solche Spektralverteilung aufweist, daß die Abhängigkeit der Transmission und/oder der BlicKwinkelabhängigkeit des Kontrastes möglichst gering ist, sind bevorzugt und Gegenstand dieser Erfindung.

Die erfindungsgemäßen ECB-Systeme sind weiter durch günstige Werte für die Blickwinkelabhängigkeit des Kontrastes gekennzeichnet, wobei i.a. die Blickwinkelabhängigkeit des Kontrastes nur unwesentlich von der Polansatorstellung beeinflußt wird.

Die Blickwinkelabhängigkeit des Kontrastes kann jedoch sowohl für herkömmliche als auch für erfindungsgemäße ECB-Systeme wesentlich verbessert werden, wenn der optische Gangunterschied sowohl der zur Informationsdarstellung benutzten Flüssigkristallschicht als auch der Kompensationsschicht d · Δn ≤ 0,4 µm und insbesondere d · Δn ≤ 0,3 µm gewählt wird. Herkömmliche und erfindungsgemäße ECB-Systeme mit derartigen optischen Gangunierschieden sind bevorzugt und Gegenstand dieser Erfindung.

Ein herkömmliches kompensiertes ECBSystem benutzt zur Informationsdarstellung eine unverdrillte Flüssikristallschicht und weist ebenso wie die Kompensationsschicht einen optischen Gangunterschied von d · Δn = 0,28 µm auf. Die Schichtdicke der zur lnformationsdarstellung benutzten Flüssigkristallschicht beträgt.. µm und der Brechungsindex ist Δn = 0,05... Als Kompensationsschicht kann z.B. eine nach dem in EP 0,240,379 beschrieben Verfahren hergestellte einachsige, optisch negative Polymerfolie verwendet werden. Auf der Eingangs- und Ausgangsseite befindet sich je ein Polarisator, wobei .. = 45° ist und der hintere Polarisator gegenüber dem vorderen um 90° gedreht ist. Es sind ...... Kontrastlinien für Werte des Kontrasts von .... 0, 20,...... 40 gezeigt. Man entnimmt, daß die Blickwinkelabhängigkeit des Kontrasts für das beschriebene herkömmliche System mit d · Δn = 0,28 excellent ist. Die Blickwinkelabhängigkeit ist deutlich ........er als die herkömmlicher Systemen mit höherem Gangunterschied von z.B. 0,6 µm ≤ d · Δn ≤ 1,0 µm.

Es sind elektrooptische Kennlinien für ein erfindungsgemäßes ECB-System gezeigt, bei dem die ECB-Flüssigkristallschicht einen Twistwinkel von 22,5° und einen optischen Gangunterschied von d · Δn = 0.28 µm aufweist. Als Kompensationsschicht wird z.B. eine einachsige, optisch negative Poymerfolie verwendet. Die elektrooptische Kennlinie wird bei einer optimierten Polarisatorstellung mit .......... 56,25° erhalten, während die Kurve .... der herkömmlichen Polarisatoranordnung entspricht. Die Isokontrastlinien für das optimierte System sind gezeigt. Ein Vergleich der Isokontrastlinien zeigt, daß die Blickwinkelabängigkeit des Kontrasts durch Verringerung des optischen Gangunterschieds d·Δn deutlich verbessert werden kann. Betrachtet man die elektrooptischen Kennlinien aus so wird deutlich, daß Systeme mit kleinerem d·Δn eine geringere Steilheit der elektrooptischen Kennlinie aufweisen, was jedoch insbesondere bei einer Aktiv-Matrix-Ansteuerung vorteilhaft ist, da die Darstellbarkeit von Grautönen erleichtert ist.

Auch bei erfindungsgemäßen ECB-Systemen mit höherem Verdrillungswinkel wird eine deutliche Verbesserung der Blickwinkelabhängigkeit des Kontrasts beobachtet, wenn der optische Gangunterschied der ECB-Schicht klein ist.

Die erfindungsgemäßen elektrooptischen Systeme zeichnen sich gegenüber herkömmlichen durch verbesserte elektrooptische Eigenschaften und insbesondere einen hohen Kontrast und/oder eine hohe Blickwinkelunabhängigkeit des Kontrast und/oder der Farbwerte aus, so daß ihnen eine erhebliche wirtschaftliche Bedeutung zukommt.

### Figur 2

... Lichtquelle
... Spiegel
... McNeil Prisma
.... Flüssigkristallzelle
... Projektionslinsen

## Patentansprüche

1. Elektrooptisches System enthaltend
- eine verdrillte nematische Flüssigkristallschicht zwischen zwei Substraten, deren Innenseiten mit Elektrodenschichten und darüberliegenden Orientierungsschichten versehen sind, wobei der Flüssigkristall eine homöotrope oder eine parallele Randorientierung, letztere mit einem Verdrillungswinkel 0° ≤ β ≤ 600° und
- eine oder mehrere Kompensationsschichten, die auf einer Folge von optisch positiven Schichten basiert, aufweist, und
- mindestens eine Vorrichtung zur Linearpolarisation des Lichts in einer derartigen Anordnung, daß das Licht vor Eintritt in die Flüssigkristallschicht und nach Austritt aus dieser mindestens je einmal eine Polarisationsvorrichtung passiert,
dadurch gekennzeichnet, daß die Kompensationsschicht auf einem drei optische Brechungsindices aufweisenden Material basiert, von denen einer kleiner als die beiden anderen ist, wobei die dem kleineren Brechungsindex entsprechende Achse mit der Elektrodenoberfläche einen Winkel 2° ≤ τ ≤ 60° so bildet, daß der Winkel zwischen der optischen Achse der Kompensationsschicht und der ansteuerbaren Flüssigkristallschicht beim Anlegen einer Spannung ein Minimum durchläuft, und daß die von den beiden anderen Brechungsindices aufgespannte Ebene mit den Direktoren der Flüssigkristallmoleküle der Flüssigkristallschicht an den einander zugewandten Oberflächen einen Winkel zwischen 30° und 150° bildet.

2. Elektrooptisches System nach Anspruch 1, dadurch gekennzeichnet, daß die Kompensationsschicht auf einer Folge von optisch positiven Schichten mit alternierender Orientierung basiert.

3. Elektrooptisches System, welches
- eine verdrillte nematische Flüssigkristallschicht zwischen zwei Substraten, deren Innenseiten mit Elektrodenschichten und darüberliegenden Orientierungsschichten versehen sind, wobei der Flüssigkristall eine homöotrope oder eine parallele Randorientierung, letztere mit einem Verdrillungswinkel 0° ≤ β ≤ 600° und
- eine oder mehrere Kompensationsschichten aufweist, und
- mindestens eine Vorrichtung zur Linearpolarisation des Lichts in einer derartigen Anordnung, daß das Licht vor Eintritt in die Flüssigkristallschicht und nach Austritt aus dieser mindestens je einmal eine Polarisationsvorrichtung passiert,
dadurch gekennzeichnet, daß die Kompensationsschicht auf einer Folge von optisch positiven Schichten die auf einem drei optische Brechungsindices aufweisenden Material basieren, basiert, wobei die optische Achse zweier aufeinanderfolgender Schichten einen Winkel zwischen 60° und 120° bilden und deren dem kleineren Brechungsindex entsprechende Achse im wesentlichen parallel zu den Elektrodenoberflächen ist.

4. Elektrooptisches System nach mindestens einem der Ansprüche 1 und 3, dadurch gekennzeichnet, daß die Kompensationsschicht auf einer Folge von mindestens zwei optisch positiven Schichten mit alternierender homogener und homöotroper Orientierung basiert.

5. Elektrooptisches System nach mindestens einem der Ansprüche 1 bis 4, dadurch gekennzeichnet, daß die Kompensationsschicht auf nematischen Flüssigkristallen basiert.

6. Elektrooptisches System nach Anspruch 5, dadurch gekennzeichnet, daß die Kompensationsschicht auf mindestens einer nematischen Flüssigkristallzelle basiert.

7. Elektrooptisches System nach mindestens einem der Ansprüche 1 bis 4, dadurch gekennzeichnet, daß die Kompensationsschicht auf diskotischen Flüssigkristallen basiert.

8. Elektrooptisches System nach mindestens einem der Ansprüche 1 bis 4, dadurch gekennzeichnet, daß die Kompensationsschicht auf flüssigkristallinen Polymeren basiert.

9. Elektrooptisches System nach mindestens einem der Ansprüche 1-8, dadurch gekennzeichnet, daß die Flüssigkristallmoleküle der Kompensationsschicht oder mesogenen Gruppen orientiert sind.

10. Elektrooptisches System nach Anspruch 9, dadurch gekennzeichnet, daß die Flüssigkristallmoleküle oder mesogenen Gruppen der Kompensationsschicht unverdrillt oder verdrillt sind.

11. Elektrooptisches System nach mindestens einem der Ansprüche 9 oder 10, dadurch gekennzeichnet, daß die Orientierung der polymeren Flüssigkristalle der Kompensationsschicht durch Abkühlung unter die Glastemperatur eingefroren ist.

12. Elektrooptisches System nach mindestens einem der Ansprüche 1 bis 4, dadurch gekennzeichnet, daß die Kompensationsschicht auf axial verstrecktem Polymermaterial basiert.

## Claims

1. Electro-optical system comprising
- a twisted nematic liquid-crystal layer between two substrates provided on the inside with electrode layers and alignment layers thereon, where the liquid crystal has a homeotropic or parallel edge alignment, the latter with a twist angle of 0° ≤ β ≤ 600°, and
- one or more compensation layers based on a sequence of optically positive layers, and
- at least one device for linear polarization of the light in such an arrangement that the light passes through a polarization device at least once before entering and at least once after exiting the liquid-crystal layer,
characterized in that the compensation layer is based on a material having three optical refractive indices, of which one is lower than the other two, where the axis corresponding to the lower refractive index forms an angle of 2° ≤ τ ≤ 60° with the electrode surface so that the angle between the optical axis of the compensation layer and the addressable liquid-crystal layer passes through a minimum on application of a voltage, and the plane set up by the other two refractive indices forms an angle of between 30° and 150° with the directors of the liquid-crystal molecules of the liquid-crystal layer at the surfaces facing one another.

2. Electro-optical system according to Claim 1, characterized in that the compensation layer is based on a sequence of optically positive layers with alternating alignment.

3. Electro-optical system comprising
- a twisted nematic liquid-crystal layer between two substrates provided on the inside with electrode layers and alignment layers thereon, where the liquid crystal has a homeotropic or parallel edge alignment, the latter with a twist angle of 0° ≤ β ≤ 600°, and
- one or more compensation layers, and
- at least one device for linear polarization of the light in such an arrangement that the light passes through a polarization device at least once before entering and at least once after exiting the liquid-crystal layer,
characterized in that the compensation layer is based on a sequence of optically positive layers which are based on a material having three optical refractive indices, where the optical axes of two successive layers form an angle of between 60° and 120° and the axis corresponding to the smaller refractive index is essentially parallel to the electrode surfaces.

4. Electro-optical system according to at least one of Claims 1 and 3, characterized in that the compensation layer is based on a sequence of at least two optically positive layers of alternating homogeneous and homeotropic alignment.

5. Electro-optical system according to at least one of Claims 1 to 4, characterized in that the compensation layer is based on nematic liquid crystals.

6. Electro-optical system according to Claim 5, characterized in that the compensation layer is based on at least one nematic liquid-crystal cell.

7. Electro-optical system according to at least one of Claims 1 to 4, characterized in that the compensation layer is based on discotic liquid crystals.

8. Electro-optical system according to at least one of Claims 1 to 4, characterized in that the compensation layer is based on liquid-crystalline polymers.

9. Electro-optical system according to at least one of Claims 1-8, characterized in that the liquid-crystal molecules of the compensation layer or mesogenic groups are aligned.

10. Electro-optical system according to Claim 9, characterized in that the liquid-crystal molecules or mesogenic groups of the compensation layer are untwisted or twisted.

11. Electro-optical system according to at least one of Claims 9 and 10, characterized in that the alignment of the polymeric liquid crystals of the compensation layer has been frozen by cooling to below the glass transition temperature.

12. Electro-optical system according to at least one of Claims 1 to 4, characterized in that the compensation layer is based on axially elongated polymer material.

## Revendications

1. Système électro-optique comprenant :
- une couche nématique torsadée de cristaux liquides entre deux substrats dont les faces intérieures sont dotées de couches d'électrodes et de couches d'orientation placées par-dessus, où le cristal liquide présente une orientation de limite homeotrope ou parallèle, cette dernière ayant un angle de torsion de 0° ≤ β ≤ 600°, et
- une ou plusieurs couches de compensation qui a ou qui ont comme base une succession de couches optiquement positives, et
- au moins un dispositif de polarisation linéaire de la lumière dans une disposition d'un type tel que la lumière, avant d'entrer dans la couche de cristaux liquides et de sortir de celle-ci, traverse au moins à chaque fois un dispositif de polarisation,
caractérisé en ce que la couche de compensation a comme base un matériau présentant trois indices de réfraction optique, dont un indice est plus petit que les deux autres, où l'axe correspondant à l'indice de réfraction plus petit forme avec la surface des électrodes un angle de 2° ≤ τ ≤ 60°, de façon telle que l'angle entre l'axe optique de la couche de compensation et la couche excitable de cristaux liquides lors de l'application d'une tension, parcourt un minimum, et
en ce que le plan déterminé par les deux autres indices de réfraction forme, avec les éléments directeurs des molécules de cristaux liquides de la couche de cristaux liquides, au niveau des surfaces tournées l'une vers l'autre, un angle compris entre 30° et 150°.

2. Système électro-optique selon la revendication 1, caractérisé en ce que la couche de compensation a comme base une succession de couches optiquement positives à orientation alternée.

3. Système électro-optique comprenant :
- une couche nématique torsadée de cristaux liquides entre deux substrats dont les faces intérieures sont dotées de couches d'électrodes et de couches d'orientation placées par-dessus, où le cristal liquide présente une orientation de limite homotrope ou parallèle, cette dernière ayant un angle de torsion de 0° ≤ β ≤ 600°, et
- une ou plusieurs couches de compensation, et
- au moins un dispositif de polarisation linéaire de la lumière dans une disposition d'un type tel que la lumière, avant d'entrer dans la couche de cristaux liquides et de sortir de celle-ci, traverse au moins à chaque fois un dispositif de polarisation,
caractérisé en ce que la couche de compensation a comme base une succession de couches optiquement positives qui ont comme base un matériau présentant trois indices de réfraction optique, où l'axe optique de deux couches se succédant forme un angle compris entre 60° et 120°, et dont l'axe correspondant à l'indice de réfraction plus petit est sensiblement parallèle aux surfaces des électrodes.

4. Système électro-optique selon au moins l'une des revendications 1 et 3, caractérisé en ce que la couche de compensation a comme base une succession d'au moins deux couches optiquement positives à orientation alternée homogène et homotrope.

5. Système électro-optique selon au moins l'une quelconque des revendications 1 à 4, caractérisé en ce que la couche de compensation a comme base des cristaux liquides nématiques.

6. Système électro-optique selon la revendication 5, caractérisé en ce que la couche de compensation a comme base au moins une cellule nématique de cristaux liquides.

7. Système électro-optique selon au moins l'une quelconque des revendications 1 à 4, caractérisé en ce que la couche de compensation est à base de cristaux liquides discotiques.

8. Système électro-optique selon au moins l'une quelconque des revendications 1 à 4, caractérisé en ce que la couche de compensation est à base de polymères de cristaux liquides.

9. Système électro-optique selon au moins l'une quelconque des revendications 1 à 8, caractérisé en ce que les molécules de cristaux liquides de la couche de compensation ou les groupes mésogènes sont orientés.

10. Système électro-optique selon la revendication 9, caractérisé en ce que les molécules de cristaux liquides ou les groupes mésogènes de la couche de compensation sont non torsadés ou torsadés.

11. Système électro-optique selon au moins l'une des revendications 9 ou 10, caractérisé en ce que l'orientation des cristaux liquides polymères de la couche de compensation est solidifiée par refroidissement au-dessous de la température du verre.

12. Système électro-optique selon au moins l'une quelconque des revendications 1 à 4, caractérisé en ce que la couche de compensation a comme base un matériau de polymère étiré axialement.
